# EUROPEAN PATENT APPLICATION

(11) **EP 2 397 955 A1**
(43) Date of publication of application: **21.12.2011**
(21) Application number: 11181522.1
(22) Date of filing: 17.11.2004
(51) Int. Cl.: G06F 17/30

(54) **Methods and systems for improving a search ranking using article information**

(30) Priority: 31.12.2003 US 749434
(62) Divisional of application: 04811317.9
(71) Applicant: Google Inc., Mountain View, CA 94043 (US)
(72) Inventor: Lawrence, Stephen R, Mountain View, CA California 94043 (US); Khan, Omar Habib, Toronto, Ontario M8Z 2N3 (CA); Bhatla, Nikhil, Walnut Creek, CA California 94596 (US)
(74) Representative: Collins, John David

(57) **Abstract**

Systems and methods that improve client-side searching are described. In one aspect, a system and method for receiving a search query, determining a relevant article associated with the search query, and determining a ranking score for the relevant article based at least in part on client-side behavior data associated with the relevant article is described.

## Description

### FIELD OF THE INVENTION

The invention generally relates to search engines. More particularly, the invention relates to methods and systems for improving a search ranking using article information such as client-side information.

### BACKGROUND

Search engines are useful for locating a specific desired or relevant article from a large collection of articles. Conventional search engines often return results based on a scoring or ranking system. For example, conventional search engines sort articles of a search result based on the contents of the articles, such as on the number of times a keyword or particular word or phrase appears in each article.

Conventional client-side applications return results based, for example, on certain article attributes or history data. For example, existing client-side search applications provide search results ranked by the date and time the article was last saved, the type of article, or the size of the article. The user can restrict the search by entering other parameters such as last edit time, other words or phrases in the article, or article type. The article attributes and history data used by conventional client-side search applications to rank the located articles is limited.

The sorting and ranking aspects of such conventional systems are insufficient. The lack of an effective ranking capability often results in an overwhelming number of search results, and requires such things as a lot of cognitive effort on behalf of the user in crafting (or re-crafting) useful search queries and further investments of time. Existing client-side search applications do not effectively rank articles according to, or even evaluate, many relevant factors that could serve to better narrow a search to the desirable articles. Accordingly, existing client-side search applications can be time and labor intensive, burdensome to use, slow, and generally ineffective.

The need exists then for methods and systems for improving search ranking using article information, such as client-side information. For example, a need exists for a client-side search application that will rank articles that reside in the client computer's file structure or have been previously accessed by the user based on sufficient factors so that the most relevant articles are returned quickly and easily to the user.

### SUMMARY

Embodiments of the present invention comprise systems and methods that improve searching. One aspect of one embodiment of the present invention comprises sorting and ranking search results based at least in part on client-side behavior data associated with the ranked articles. This allows, for example, a client-side search engine to better evaluate which potential search results will be of most interest to a user. Further features and advantages of the present invention are set forth below.

### BRIEF DESCRIPTION OF THE DRAWINGS

FIG. 1 illustrates a block diagram of a system in accordance with one embodiment of the present invention;
FIG. 2 illustrates a detailed view of a portion of the system illustrated in FIG. 1 in accordance with one embodiment of the present invention;
FIG. 3 illustrates a flow diagram of a method in accordance with one embodiment of the present invention;
FIG. 4 illustrates a flow diagram of one embodiment of a subroutine of the method shown in FIG. 3 and;
FIG. 5 illustrates a flow diagram of one embodiment of a subroutine of the subroutine show in FIG. 4.

### DETAILED DESCRIPTION

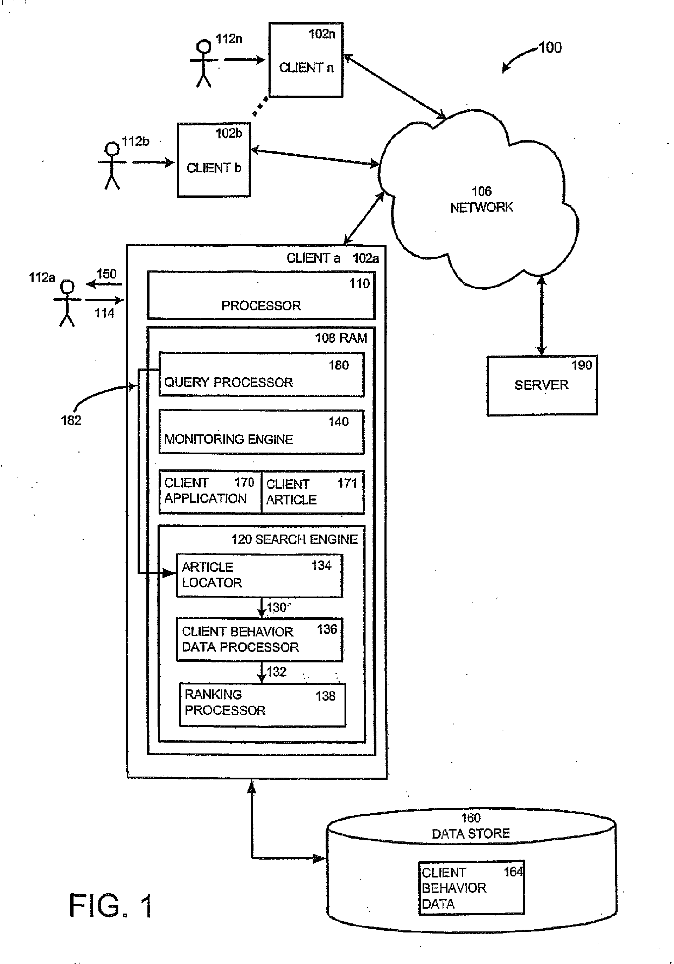

The present invention comprises methods and systems for improving a search ranking using article information. Various systems in accordance with the present invention may be constructed. FIG. 1 is a diagram illustrating an exemplary system in which exemplary embodiments of the present invention may operate. The present invention may operate, and be embodied in, other systems as well.

The system 100 shown in FIG. 1 comprises multiple client devices 102a-n, users 112an, a network 106, and a server 190. The network 106 shown comprises the Internet. In other embodiments, other networks, such as an intranet, LAN or WAN may be used. The client devices 102a-n shown each comprise a computer-readable medium, such as a random access memory (RAM) 108 coupled to a processor 110. The processor 110 executes a set of computer-executable program instructions stored in memory 108. Such processors may comprise a microprocessor, an ASIC, and state machines. Such processors comprise, or communicate with, media, for example computer-readable media, which stores instructions that, when executed by the processor, cause the processor to perform the methods described herein.

Embodiments of computer-readable media include, but are not limited to, an electronic, optical, magnetic, or other storage or transmission device capable of providing a processor with computer-readable instructions. Other examples of suitable media comprise, but are not limited to, a floppy disk, CD-ROM, magnetic disk, memory chip, ROM, RAM, an ASIC, a configured processor, all optical media, all magnetic tape or other magnetic media, or any other medium from which a computer processor can read instructions. Also, various other forms of computer-readable media may transmit or carry instructions to a computer, including a router, private or public network, or other transmission device or channel, both wired and wireless. The instructions may comprise code from any computer-programming language, including, for example, C, C++, C#, Visual Basic, HTML, Java, and JavaScript.

Client devices 102a-n may also comprise a number of external or internal devices such as a mouse, a CD-ROM, a keyboard, voice recognition hardware, a display, or other input or output devices. Examples of client devices 102a-n are personal computers, digital assistants, personal digital assistants, cellular phones, mobile phones, smart phones, pagers, digital tablets, laptop computers, wearable computers, a processor-based device, and similar types of systems and devices. In general, a client device 102a-n may be any type of processor-based platform that interacts with one or more application programs. The client devices in 102a-n shown in FIG. 1 comprise personal computers.

The memory 108 comprises a monitoring engine 140, a client application 170, a client article 171, and a query processor 180. Articles may comprise, documents, for example, web pages of various formats, such as HTML, XML, XHTML, Portable Document Format (PDF) files, and word processor, database, and application program document files, chat messages, email messages, audio, video, or any other information of any type whatsoever made available on a network (such as the Internet), a personal computer, or other computing or storage means. The client article 171 comprises any article associated with the user or client device. In the embodiment shown, the client application 170 comprises a word processor application, and the client article 171 comprises a document in a format usable with the word processor application.

The monitoring engine 140 shown determines client-side behavior data associated with the client application 170. The client-side behavior data may comprise, for example, input data, correspondence data, article history data, and, reference data, as well as other forms of client-side behavior data. Each of these types of data will be discussed more fully below. The monitoring engine 140 monitors the user's interactions and the client computer's interactions with articles on the client computer. In other embodiments, the monitoring engine 140 monitors multiple users' interactions with articles, on the client computer, on an associated network, or elsewhere. As one example, the monitoring engine 140 monitors the client article 171 and detects that the user 112a is typing data into the client article 171 using the client application 170. The monitoring engine 140 monitors and records the amount of time the user 112a spends typing data into the article. The monitoring engine 140 monitors and records interactions with multiple articles (not shown here) on client 102a. The garnering and use of client-side behavior data is described further below.

The monitoring engine 140, according to the illustrated embodiment, stores the gathered client-side behavior data in a data store 160. The data store 160 in the illustrated embodiment comprises a client behavior data database 164. According to other aspects or embodiments of the present invention, the data store 160 could comprise a pre-existing database. Data storage elements of the data store 160 may comprise any one or combination of methods for storing data, including without limitation, arrays, hashtables, lists, and pairs. Other similar types of data storage devices can be accessed by the client device 102. The client behavior data database 164 stores data associated with the client application 170 and client-side behavior data, such as printing, viewing, scrolling, mouse movement, emailing, or other forms of client-side behavior data. The client behavior data may be combined with other data in a single database, or may be stored in multiple databases.

The query processor 180 comprises software and hardware that enable the query processor 180 to receive either an explicit search query 114 entered by the user 112a or generate an implicit query based on client-side behavior data. The query processor 180 then formats the implicit or explicit query into a query signal 182 that is receivable by a search engine 120.

The memory 108 further comprises the search engine 120. The search engine 120 locates relevant information in response to the query signal 182 from the query processor 180. The query signal 182 may correspond, for example, to an explicit query signal generated based on the search query entered by a user 112a, or an implicit query signal generated based on event signals from the monitoring engine 140. The search engine 120 responds to the query signal 182 by returning a set of relevant information or a search result 150 to the user 112a.

The search engine 120 shown comprises an article locator 134, a ranking processor 138, and a client behavior data processor 136. In the embodiment shown, each comprises computer code residing in the memory 108. The article locator 134 identifies a set of relevant articles responsive to the query signal 182 from the query processor 180. The client behavior data processor 136 retrieves from the data store 160, or otherwise determines, client-side behavior data associated with articles in the set of relevant articles returned by the article locator 134. The ranking processor 138 ranks or scores each article in the set of relevant articles identified by the article locator 134 based upon relevance to the query signal 182 in light of the client-side behavior data determined by the client behavior data processor 136. Note that other functions and characteristics of the article locator 134, ranking processor 138, and user dataprocessorl38 are further described below.

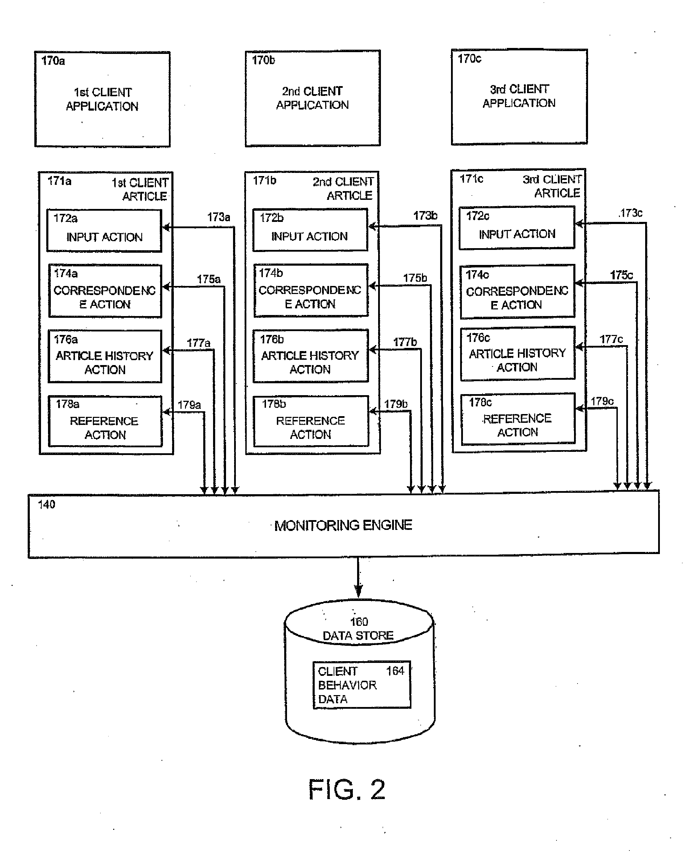

FIG. 2 shows a more detailed view of the monitoring engine 140 shown in FIG. 1. As the client 102a or the user 112a interacts with a client articles 171a-c, the monitoring engine 140 monitors such client behavior activity, and from this client behavior activity creates client-side behavior data associated with the client articles 171a-c. The client behavior activity associated with the client articles 171a-c, according to the embodiment illustrated, comprises one or more of input action 172a-c, correspondence action 174a-c, article history action 176a-c, and reference action 178a-c. These four general categories of action of the user 112a and/or the client 102a associated with the client articles are given only for purposes of illustration. There are other general categories of actions not depicted including for example associate action which is discussed further below. In FIG. 2, client articles 171a-c are depicted to illustrate that the monitoring engine 140 may monitor a plurality of articles associated with one or more applications and create client-side behavior data associated with each article individually. The types of data illustrated in FIG. 2 are offered only as examples of types of client-side behavior data associated with client articles 171 a-c associated with the client applications 170a-c. Other types of client-side behavior data associated with client articles 171a-c can be utilized within the scope of the present invention. For example, client-side behavior data can include data regarding client preferences, such as how the user 112a has responded to a particular type of article in the past, or how much client-side activity is typically associated with an article of a particular type. For example, the user 112a can demonstrate a preference for web pages by selecting web pages from a list of search results containing both web pages and word processing documents, or by conducting a majority of the user's behavior within a particular type of article. The present invention can use the data reflecting the preferences of the user 112a, alone or in combination with other factors, to determine a ranking score for associated articles.

The monitoring engine 140 monitors the actions of the user 112a and/or the client 102a and determines corresponding client-side behavior data. The corresponding client-side behavior data may comprise, for example, input action data 172a-c, correspondence action data 174a-c, article history action data 176a-c, or reference action data 178a-c. More generally, the client-side behavior data may comprise any type of client activity that can occur in a given application. The given application may have one or more input action methods, each of which can be associated with client-side behavior data and may convey an associated ranking weight to the article that is being acted upon. For illustration purposes only four general categories of client-side behavior data have been depicted in FIG. 2. The present invention is not limited however to these four general categories of client-side behavior depicted in FIG. 2. For example, a computer programming application can have the input action of compiling data. A user working within the computer programming application may periodically compile the data. This action would indicate a higher significance to the article being compiled and is another example of the client-side behavior data created and used by the present invention. The present invention may also assign differing weighting factors to differing types of actions associated with a particular application.

The input action data 172a-c depicted in FIG. 2 may comprise, for example, typing data, mouse movement data, scrolling data, voice recognition input data, copying and pasting data, or any other form of input data. The correspondence action data 174a-c may comprise, for example, printing data, replying data, emailing data, forwarding data, or any other form of correspondence data. The article history action data 176a-c may comprise, for example, time of last save data, size of file data, author data, or any other type of article history data. The reference action data 178a-c may comprise, for example, book-marking data, hyper-linking data, footnote data, cross referencing data, or any other type of referencing data. Association action data, not depicted in FIG. 2, may comprise, for example, that an email is associated with a word processing document (via an attachment) or that two documents are worked on in parallel, like a word processing document and a presentation. One or more of the data comprising the corresponding client-side behavior data for the client articles 171a-c may potentially be a null set.

After determining the corresponding client-side behavior data for the client articles 171 a-c, the monitoring engine 140 processes the client-side behavior data associated with the client articles 171a-c so that it is ready to be received by a client behavior data database 164 located within a data store 160. The monitoring engine 140 then transmits the data to the data store 160 for storage. The client-side behavior data is transmitted with identity information for the article associated with the data, and the data is stored in association with the identity information.

The monitoring engine 140 determines client-side behavior data for multiple user articles and ensures that the client-side behavior data associated with an article is identified with that particular article. The monitoring engine 140 transmits the client-side behavior data, together with identifying information that associates the data with a particular article to which it relates, to the data store 160 for storage in a manner that preserves associations between the article and the client behaviors.

As an example of the functioning of the monitoring engine 140, consider a user 112a working with an article associated with a word processing application. In this example, the article is represented by the client article 171 a of FIG. 2 and the word processing application is represented by the client article 171 a. As the user 112a interacts with the client article 171 a (in this example, the article from the word processing application) client behavior data is monitored and received by the monitoring engine 140.

In this example, if the user 112a types text into client article 171 a, the monitoring engine 140 detects this activity and receives input action data 173a comprising, for example, data indicating what the user 112a typed and for how long the user 112a typed. If the user 112a then saves the article and emails it to a friend, the monitoring engine 140 detects this activity and receives additional user behavior data comprising, for example, article history action data 177a comprising, for example, the time and date the article was saved and the total number of bytes of data in the article. The monitoring engine 140 has also created correspondence action data 175a comprising, for example, the fact that the article was emailed, the recipient to whom the article was sent, and any description accompanying the article.

The monitoring engine 140 then configures the client-side behavior data associated with the word processing application to be received by the client behavior data database 164 located within the data store 160 in a manner so that it remains associated with the article to which it relates.

Thus, in the present example, the monitoring engine 140 creates client-side behavior data in response to the typing, saving, and emailing of the user 112a. This client-side behavior data is associated with the word processing document that the user 112a was using when the events generating the client-side behavior data occurred. Tills association is preserved in the data store 160 so that if the word processing document is determined by the article locator 134 to be relevant to the query signal 182, the client behavior data processor 136 can retrieve the client-side behavior data associated with the word processing document.

The client-side behavior data created by the monitoring engine 140 may then be used to score or rank the article by the search engine 120. For example, an article associated with a lot of printing, editing, viewing, and scrolling activity will potentially receive a higher ranking score than an article with little or no printing, editing, viewing, and scrolling activity associated with it because the activity likely indicates a higher interest of the user 112a in the article associated with this activity. A text document, for example, that was opened but never printed or edited is less likely to have been read by a user than a text document that had extensive editing and printing activity associated with it.

Similarly, a text document that does not have any typing activity associated with it is less likely to have been edited by a user than one with a lot of typing activity. An article less likely to have been edited by a user or read by a user is less likely to be as important to that user. The ranking processor 138 could, therefore, assign a lower ranking score to the article with less user activity associated with it.

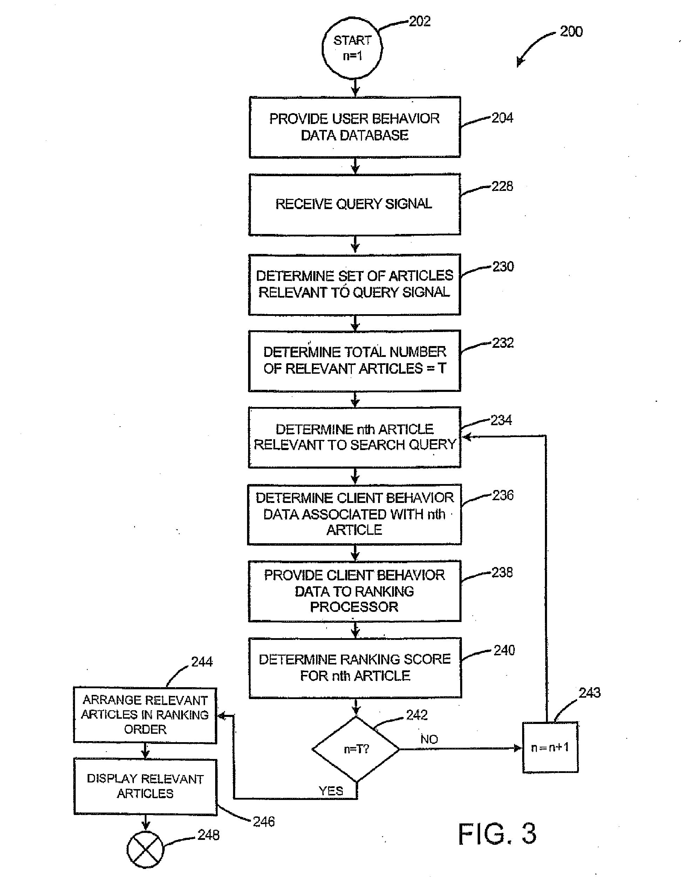

It should be noted that the present invention may comprise systems having different architecture than that which is shown in FIGS. 1 and 2. The system 100 shown in FIG. 1 and the detailed view of the monitoring system shown in FIG. 2 are merely exemplary, and are used to explain the exemplary methods shown in FIGS. 3-5.

Various methods in accordance with the present invention may be carried out. One exemplary method according to the present invention comprises receiving a search query, determining a relevant article associated with the search query, and determining a ranking score for the relevant article based at least in part on client-side behavior data associated with the relevant article.

For example, if the user 112a desires to retrieve articles relating to a sales meeting the user 112a recently attended, the user 112a may enter the terms "sales meeting" as a search query 114. The present invention will take this search query 114, "sales meeting, "and locate documents that are relevant to this search. This may include, for example, an email that contains these words in the subject field, a text document that contains these words in the body of the document, and a spreadsheet that contains these words in the title. Not all of the articles located as being relevant to the search query 114 will necessarily be of high interest to the user 112a. The present invention reflects this by ranking the relevant articles according to various actions of the user 112a when working with that article. For example, if the user 112a scrolled through the spreadsheet, clicked on it with a mouse, typed text into it, printed it, and viewed it frequently, it is likely the user 112a was editing or preparing the spreadsheet, or that it was otherwise of primary interest to the user 112a. If on the other hand, the user 112a conducted almost no activity with the text document, it is more likely this was not of primary interest to the user 112a. Thus the present invention can reflect the relative importance of the spreadsheet over the text document by ranking it with a higher ranking score. Thus, when the results of the search query 114 are returned to the user 112a, the spreadsheet can be displayed in a way that emphasizes it over the text document. Emphasizing the spreadsheet will help the user 112a select it from search results, such as the text document, that are less interesting to the user 112a.

FIGs. 3 through 5 illustrate various aspects of exemplary methods according to the present invention. FIG. 3 illustrates an exemplary method 200 in accordance with the present invention. This exemplary method is provided by way of example, as there are a variety of ways to carry out methods according to the present invention. The method 200 shown in FIG. 3 can be executed or otherwise performed by any of various systems. The method 200 is described below as carried out by the system 100 shown in FIGs. 1 and 2 by way of example, and various elements of the system 100 are referenced in explaining the example methods of FIGs. 3-5. The method 200 shown provides an improvement of client-side searching by providing for ranking search results based on client behavior data. Methods according to the present invention may be embodied in other ways, including network searching, server-side searching, combined searching, and other systems.

Each block shown in FIGs. 3-5 represents one or more processes, methods or subroutines carried out in the exemplary method 200. Referring to FIG. 3, in block 202, the example method 200 begins. In block 202, a counter variable n is set to 1. The counter variable n is used to regulate how many iterations of the method 200 are completed for a given search. Block 202 is followed by block 204, in which a client behavior data database is provided. This may be accomplished by, for example, constructing such a database with the assistance of a monitoring engine 140 or establishing communication with such a database.

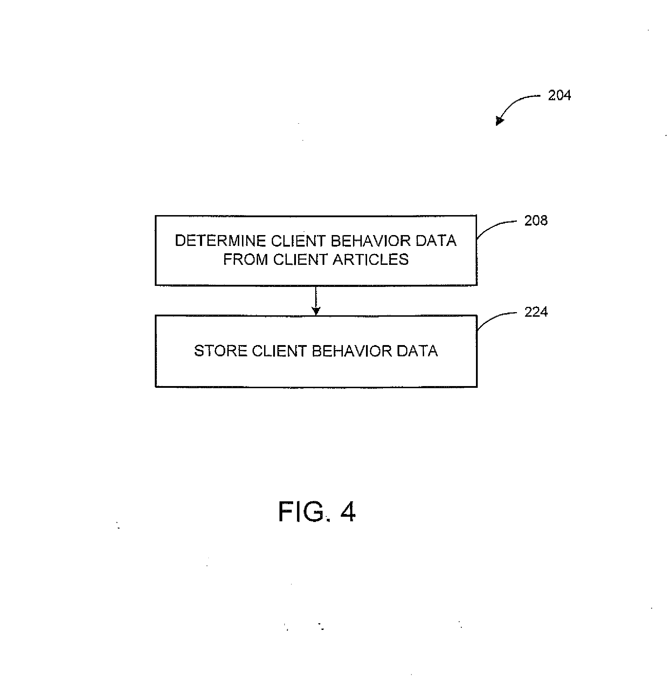

Referring now to FIG. 4, FIG. 4 is a more detailed view of block 204 from FIG. 3, and illustrates an example of a method for providing a client behavior data database. The method shown in FIG. 4 begins at block 208, in which, according to the illustrated example, client-side behavior data associated with an article is determined by a monitoring engine 140. As illustrated in FIG. 2, this client-side behavior data may comprise any number of separate types of data including, for example, input action 172a-c, correspondence action 174a-c, article history action 176a-c, or reference action 178a-c. Other types of client-side behavior data could also be received in block 208 of FIG. 4. Alternatively, the client behavior data may be received from a pre-existing database.

Block 208 is followed by block 224, in which the client-side behavior data gathered in block 208 is stored. According to the system illustrated in FIG. 4, the client behavior data from the monitoring engine 140 received from the client articles 171a-c is sent to the client behavior data database 164 in the data store 160 and is stored there. This is discussed in more detail in relation to FIG. 2.

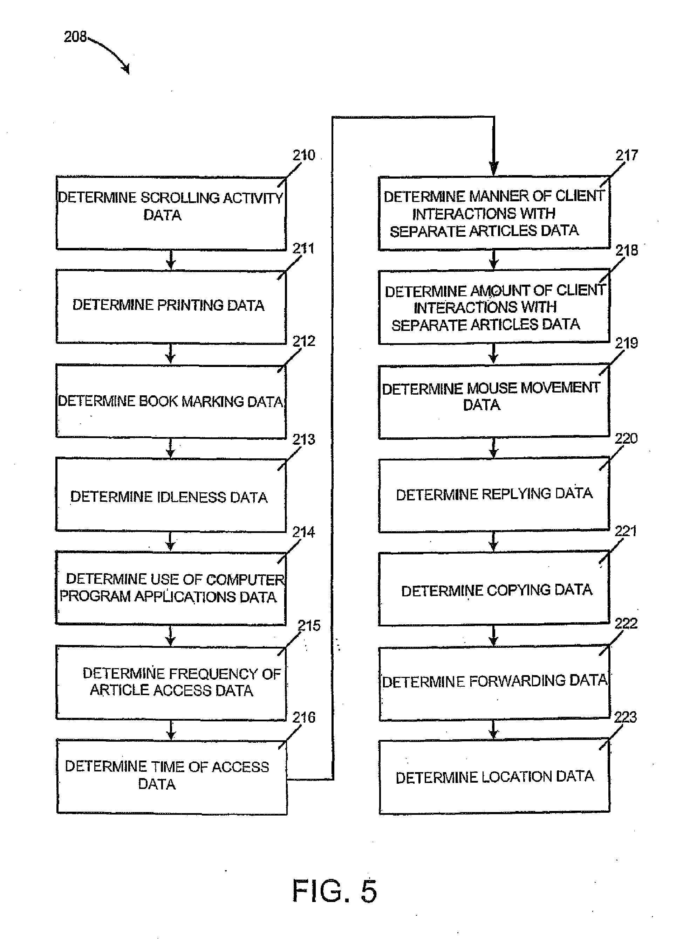

Referring now to FIG. 5, FIG. 5 is an exemplary embodiment of the process shown in block 208 of FIG. 4. In block 208 from FIG. 4, client behavior data is received from the client articles 171a-c. The method shown in FIG. 5 begins with block 210. It should be noted that the blocks in FIG. 5 are intended to serve as examples of the type of user activity data that may be recorded during block 208 of FIG. 4. FIG. 5 does not give a comprehensive list of all possible user behavior activities that may be received from a client application or otherwise received as part of the overall ranking process associated with the present invention.

FIG. 5 begins with block 210, in which scrolling activity data associated with an article is determined. Scrolling activity data may comprise, for example, data relating to the amount of scrolling on a web page or within a text article, data relating to a location within an article the scrolling activity occurs, data relating to the time spent on scrolling (as compared, for example, to the time the article was active), or other data relating to scrolling activities.

Block 210 is followed by block 211, in which printing data associated with an article is determined. Printing data may comprise, for example, data relating to when an article or article was printed, how often an article or article has been printed, what portions of an article or articles have been printed, or any other information relating to the printing of an article or article.

Block 211 is followed by block 212, in which book-marking data associated with an article is determined. Book-marking information may comprise, for example, information about book marking of an internet URL, book marking within a text article to other portions of the same article or of a separate article, how many bookmarks are connected with a particular article, the textual content of the book mark associated with the article, or any other information relating to book marks associated with the article or article.

Block 212 is followed by block 213, in which idleness data associated with an article is determined. Idleness data, may comprise, for example, data relating to how much time has elapsed since user activity with a particular article ceased, whether a particular article is active or visible to the user, whether a particular article is receiving input from a user or another program, whether other programs are receiving user input or activity, or any other data relating to idleness of a particular article.

Block 213 is followed by block 214, in which use of computer program application data associated with an article is determined. Use of computer program application data may comprise, for example, data relating to which programs are active, which programs are visible to the user, the type of input a particular application handles or processes, or other data relating to computer program application data. This could also include the number of times the application has been used, the average amount of time the user spends during a session. This information can transfer a ranking weight to the articles produced by the application.

Block 214 is followed by block 215, in which frequency of article access data associated with an article is determined. Frequency of article access data may comprise, for example, data relating to how often a particular article has been accessed, how often a particular article has been accessed by a particular user, how often a particular article is accessed compared to the frequency of other application use, the amount of time between periods of access to the article, the frequency of access as a function of other variables such as time of day, or any other data relating to frequency of use access.

Block 215 is followed by block 216, in which time of access data associated with an article is determined. Time of access data may comprise, for example, the time of day a particular article of article was accessed, the duration of access time associated with a particular article, the elapsed time since prior access to the article, the time of access of an article relative to the time of access or use of other applications, the time of use of an application or any other information relating to time of access data.

Block 216 is followed by block 217, in which manner of client interactions with a second article data is determined. Manner of client interactions with second article data may comprise, for example, the manner of input a user 112a sends to a second article, the type of input a user sends to a second article, the type of output a second article generates for a user, or the amount of output a second article generates.

Block 217 is followed by block 218, in which amount of client interactions with a second article data is determined. Manner of client interactions with second article data may comprise, for example, the amount of input a user 112a sends to a second article, the type of input a user sends to a second article, the type of output a second article generates for a user, or the amount of output a second article generates.

Block 218 is followed by block 219, in which mouse movement data is determined. Mouse movement data may comprise, for example, the amount of mouse movement within a particular article, the manner of mouse movement within an article, the likelihood that the mouse movement associated with a particular article is intentional or inadvertent, or any other data relating to mouse movement information associated with an article. The position of a mouse can also be important. If the mouse hovers over a certain area for a long period of time after being moved there, this can indicate an area of interest.

Block 219 is followed by block 220, in which replying data associated with an article is determined. Replying data may comprise, for example, whether a reply was sent via email, instant messaging, or other correspondence medium in response to an article, whether an article was received as a reply to another correspondence, whether an article requests a reply, or any other replying data associated with an article.

Block 220 is followed by block 221, in which copying data associated with an article is determined. Copying data may comprise, for example, whether a text, graphics, or other material within an article has been copied, the amount of material within an article that has been copied, whether an article comprises material that has been copied from another application, or any other copying data associated with an article.

Block 221 is followed by block 222, in which forwarding data associated with an article is determined. Forwarding data may comprise, for example, whether an article has been forwarded, whether a particular article was received as a forwarded message, or any other forwarding information associated with an article.

Block 222 is followed by block 223, in which location data associated with an article is determined. Location data may comprise, for example, the full path name pointing to a location where an article is stored or a history of where the document has been stored previously. For example, if an article is stored in "c:\documents\budgets\proposals\December Forecast.txt" then each of these terms could be associated with the article even if they do not explicitly appear in the article itself. Additionally, if the article is moved from an old location to a new location, the location data associated with the article could comprise information relating to both the path name associated with the old location and the path name associated with the new location.

The method 208 illustrated in FIG. 5 ends with block 223. For blocks 210 to 223, each block is optional and may not be included, or may have no data for a particular article. Note also that the determining of client-side behavior data preferably goes on constantly, even though only one loop of such monitoring is shown in FIG. 5 for purposes of illustration. The method of FIG. 5 is a subroutine carried out in block 208 of the method of FIG. 4.

Returning now to FIG. 4, it is a subroutine of the method of FIG. 3. Block 208 of FIG. 4 is followed by block 224, in which the client-side behavior data is stored. The client-side behavior data may be stored, for example, in the data store 160, in the memory 108, or in any other storage medium associated with the client 102. Block 224 is the last block illustrated in the subroutine of FIG. 4.

Referring now again to FIG. 3, block 204 is followed by block 228, in which a query signal 182 is received by a search engine 120. The query signal 182 may be generated in response to a search query 114 entered explicitly by the user 112a, or through an implicit search query generated from contextual clues from the monitoring engine 140. For example, if the user 112a is working in a word processing application and types the phrase "agenda for budgeting meeting" into the article, the query processor 180 can receive information regarding the input text from the monitoring engine 140 and generate an implicit query to search for articles containing any of the terms "agenda," "budgeting, "or" meeting. "The query processor 180 can then send the query signal 182 reflecting this implicit search query to the search engine 120.

Block 228 is followed by block 230, in which a set of relevant articles relevant to the query signal 182 is determined by the article locator 134. In this block, the article locator 134 located within the search engine 120 determines a relevant article or a plurality of relevant articles from article data located in the data store 160 or memory 108. For example, if the search query 114 input by the user is "budget meeting proposal, "the article locator 134 will determine which articles in the data store 160 or the memory 108 are relevant to the search terms. This set may comprise, for example, emails, word processing documents, chat sessions, and spreadsheets that contains the words "budget, ""meeting, "and/or" proposal." The relevant articles determined in this block are potentially numerous compared to the search result 150 that will ultimately be returned to the user 112a following a ranking, sorting, and displaying of the relevant articles. The relevant articles determined in this block may be sorted by relevance using a traditional method without client-side behavior information, or may be sorted by date.

Block 230 is followed by block 232, in which a total number of relevant articles T in the set of relevant articles returned by the article locator 134 is determined. Preferably, the total number of relevant articles T reflects all of the articles determined to be relevant to the search, though other embodiments may use a different number (e. g. a maximum of 100). The variable T is used in connection with a counter n to determine how many iterations of part of the shown method 200 to complete.

Block 232 is followed by block 234, in which the search engine 120 determines an"nth" relevant article from the total number of relevant articles T associated with the query signal 182. During the first iteration of the method 200, the counter n is equal to 1 and so the search engine 120 determines the first relevant article associated with the query signal 182. On subsequent iterations, the search engine 120 determines the subsequent relevant document within the total number of relevant articles T. In alternate embodiments, the relevant articles associated with the query signal 182 may already be sorted. For example, the articles may be sorted by a relevance measure that does not include client behavior data, or the articles may be sorted by date.

Block 234 is followed by block 236, in which client-side behavior data associated with the nth article is determined. In this block 236, in the embodiment shown, the client behavior data processor 136 located within the search engine 120 receives from the article locator 134 information indicating the nth article associated with the query. The client behavior data processor 136 then determines the client-side behavior data from the data store 160 that is associated with the nth article determined by the article locator 134 to be relevant to the query signal 182.

For example, if the query signal 182 relates to a search query 114 for "Budget meeting proposal" then the article locator 134 will locate all articles relevant to this query which may comprise, for example, all articles with the words "budget meeting proposal" in the text, title, subject field, etc. A particular nu article is then selected from all the relevant articles determined to be relevant to this query. The nth article in this example could be, for example, a spreadsheet titled "proposal for budget meeting. "According to the embodiment illustrated here, the client behavior data processor 136 can then retrieve from the data store 160 all client-side behavior data associated with the spreadsheet. This may include, for example, the amount of scrolling within the spreadsheet, whether the spreadsheet was sent via email, when it was last saved, and how many times it was printed. This client-side behavior data is then used in block 238 to help formulate a ranking score for the article.

In block 238, which follows block 236, client-side behavior data associated with the nth article is provided to the ranking processor 138. In this block 238, the client-side behavior data determined by the client behavior data processor 136 to be associated with the nu article relevant to the query signal 182 is retrieved from the client behavior data database 164 within the data store 160. The client-side behavior data retrieved from the client behavior data database 164 is then sent to the ranking processor 138. Thus, in this block, the client-side behavior data associated with an article determined to be relevant to the query signal 182 is retrieved and sent to the ranking processor 138 where it can be used to generate a ranking score as described in block 240.

In other embodiments, a "client behavior score" reflecting the relative frequency and type of interactions by the user 112a and/or client 102a with an article or a type of article, for example a web page or web pages from a particular site, is predetermined and stored in the data store 160. According to aspects of embodiments comprising a client behavior score, when the search engine 120 receives a query signal 182, the client behavior score is sent to the ranking processor 138 instead of, or in addition to, the client-side behavior data associated with the article. The client behavior score may be determined.

Following block 238 is block 240, in which a ranking score for the n^{th} article is determined. In this block 240 in the embodiment shown, the ranking processor 138 receives the client-side behavior data from the client behavior data processor 136. The ranking processor 138 also receives the query signal 182. The ranking processor 138 determines a ranking score based at least in part on the client-side behavior data retrieved from the client behavior data processor 136 associated with the n^{th} article. This may be accomplished, for example, by a ranking algorithm that weights the various client behavior data and other ranking factors associated with the query signal 182 to produce a ranking score. The different types of client behavior data may have different weights and these weights may be different for different applications. In addition to the client behavior data, the ranking processor 138 may utilize conventional methods for ranking articles according to the terms contained in the articles. It may further use information obtained from a server on a network, for example in the case of web pages, the ranking processor 138 may request a PageRank value for the web page from a server and additionally use that value to compute the ranking score. The ranking score may also depend on the type of article. The ranking score may further depend on the time such as the time of day or the day of the week. For example, a user may typically be working on and interested in certain types of articles during the day, and interested in different kinds of articles during the evening or weekends.

Consider again the example where a user 112a desires to retrieve articles relating to a sales meeting the user 112a recently attended. The user 112a may enter the terms "sales meeting" as a search query 114. A query signal 182 corresponding to the search query 114, "sales meeting, "will be generated and the article locator 134 will locate articles that are relevant to this search. This may include an email containing the words "sales meeting" in the subject field, a text document containing the words "sales meeting "in the body of the text document, and a spreadsheet containing these words in the title. Once relevant articles are located, the client behavior data processor 136 will determine what client-side behavior data is associated with that article.

The user 112a conducted certain actions in relation to the article including printing it, scrolling through the spreadsheet, clicking on it with a mouse, viewing it, and typing text into it. Because of this activity, it is likely the user 112a was editing or preparing the spreadsheet, of that it was otherwise of primary interest to user 112a. The ranking processor 138 reflects the relative importance of the spreadsheet over the other articles determined to be relevant to the search that were not associated with the same amount and type of client-side behavior data by assigning it a higher ranking score than the other relevant articles. When the results of the search query 114 are returned to the user 112a, the spreadsheet can be listed higher in the search results or otherwise displayed in a way that emphasizes it over the text document. This facilitates the user 112a in recognizing it over other articles associated with the query but of less interest to the user 112a.

Block 242 follows block 240. In block 242, it is determined whether the current article number n is equal to the total number of search results T. If n is equal to T, then the method proceeds to block 244. If n is not equal to T, the method proceeds to block 243. In block 243 n is incremented to the next integer and the method returns to block 234 to repeat the blocks 234-242. A threshold may be used on the number of articles to process or the processing time, such that less than T articles are processed. For example, no more than 1,000 articles may be processed, or processing may only be allowed to take a maximum of 500ms.

For example, on the first run through the method 200, n is equal to 1 and so the first relevant article is selected from the set of relevant articles. If there are 10 documents in the set of relevant articles then T is equal to 10. In block 242, since 1 is not equal to 10, the method will proceed to block 243 where n will receive the value n+1, which will make n now equal to 2. This process repeats until n is equal to 10. When n is equal to 10, the tenth (and final) article will be selected from the set of relevant articles. Then in block 242, since n is now equal to T, the method 200 will proceed to block 244.

In block 244, the relevant articles processed in blocks 234-240 are arranged in a ranking order according to the ranking score associated with each relevant article from block 240.

Block 244 is followed by block 246, in which the relevant articles arranged in a ranking order in the block 244 are displayed to the user 112a. There are numerous ways in which the results can be displayed to the user 112a that will reflect the ranking order from block 244. One possible way is to list the top three articles as hyperlinks and to list a single hyperlink to all other relevant articles, which the user can select if the desired article is not located within the three hyperlinks.

Block 246 is followed by block 248, in which the method 200 ends. In an alternative version of the method 200 it is possible to use the user behavior data to score documents independent of a query. For example, PageRank, although not employed here, is an example of a method that can compute a query-independent score. Later when a query is received, the method 200 can combine the query-independent user behavior score with conventional matching methods. In one version, the articles are processed in the order specified by the query-independent user behavior score. This allows the system to save processing time because it may not be necessary to process all articles. Additionally, the processing may be split into phases where the first phase produces an initial score based on the query-independent user behavior score and conventional methods, and a second phase does more expensive processing on the highest ranked articles from the first phase.

One or more scores based at least in part on client-side behavior data may also be shown to the user without reference to a search query. For example, the score or scores for a web page may be shown in a toolbar when the user browses to a site.

The present invention is not limited to returning results based on only client-side articles or searching only client-side articles. By way of example, additional embodiments of the present invention may comprise combining search results from a network, such as the internet or a local intranet, with the search results obtained by the method 200. Additionally, the present invention may determine a ranking score for an article in part on client-side behavior data and in part on internet ranking scores. Moreover, the present invention may use client-side behavior data, alone or in combination with other factors, to determine a ranking score for articles located on a network such as the internet or a local intranet. The present invention may use client-side behavior data, alone or in combination with other factors, to determine a ranking score for articles located on a client 102a, for articles located on a network 106, such as the internet or a local intranet, or any other article stored on any medium or in any location accessible by the search engine 120 locally or over a remote connection.

While the above description contains many specifics, these specifics should not be construed as limitations on the scope of the invention, but merely as exemplifications of the disclosed embodiments. Those skilled in the art will envision many other possible variations that are within the scope of the invention.

One aspect of the present invention provides a method comprising receiving or creating a search query; determining a relevant article associated with the search query; and determining a ranking score for the relevant article based at least in part on client-side behavior data associated with the relevant article.

In one embodiment the client-side client behavior data for the article is received by a ranking processor and wherein the ranking score for the relevant article based at least in part on client-side behavior data associated with the article is determined by the ranking processor.

In one embodiment the method further comprises arranging the article based upon the ranking score.

In one embodiment the search query is an explicit search query.

In one embodiment the search query is an implicit search query.

In one embodiment the client-side behavior data associated with the relevant article comprises scrolling activity data.

In one embodiment the client-side behavior data associated with the relevant article comprises printing data.

In one embodiment the client-side behavior data associated with the relevant article comprises book marking data.

In one embodiment the client-side behavior data associated with the relevant article comprises use of computer program application data.

In one embodiment the use of computer program application data is used in connection with additional client-side behavior data.

In one embodiment the additional client-side behavior data comprises idleness data.

In one embodiment the additional client-side behavior data comprises use of computer program applications data.

In one embodiment the client-side behavior data associated with the relevant article comprises frequency of article access data.

In one embodiment the client-side behavior data associated with the relevant article comprises time of access data.

In one embodiment the client-side behavior data associated with the relevant article comprises time of access relative to the access of other associated articles data.

In one embodiment the client-side behavior data associated with the relevant article comprises forwarding data.

In one embodiment the client-side behavior data associated with the relevant article comprises copying data.

In one embodiment the client-side behavior data associated with the relevant article comprises replying data.

In one embodiment the client-side behavior data associated with the relevant article comprises mouse movement data.

In one embodiment the client-side behavior data associated with the relevant article comprises user interactions with a separate article data.

In one embodiment the client-side behavior data associated with the relevant article comprises location data.

In one embodiment the method further comprises determining a combined score based at least in part on client-side behavior data for multiple users.

In one embodiment the method further comprises determining a combined score from a plurality of types of client-side behavior data.

In one embodiment creating a combined score from a plurality of types of client-side behavior data comprises using different weights for different types of behavior data or for client-side behavior data associated with different applications.

Another aspect of the invention provides a method comprising: determining client-side behavior data associated with an article; providing the client-side behavior data associated with the article to a ranking processor ; determining a predetermined client behavior score based at least in part on the client behavior data associated with the article; and storing the predetermined client behavior score associated with the article in a data store, wherein the predetermined client behavior score is associated with the article in the data store.

In one embodiment the method further comprises receiving a search query; determining a relevant article associated with the search query; receiving from a data store a predetermined client behavior score associated with the relevant article; and arranging the relevant article based at least in part on the predetermined client behavior score associated with the relevant article.

One aspect of the invention provides a method comprising determining a query-independent score for an article based at least in part on client-side behavior data associated with the article; receiving a search query; determining a relevant article associated with the query; and determining a ranking score based at least in part on the query-independent score.

In one embodiment the method further comprises processing the article in an order determined by the query-independent score.

Another aspect of the invention provides a method comprising identifying an article; determining client-side behavior data for the article; determining a score for the article based at least in part on client-side behavior data associated with the article; and causing a display of the score.

Another aspect of the invention provides a computer readable medium containing program code comprising: program code for receiving or creating a search query; program code for determining a relevant article associated with the search query; and program code for determining a ranking score for the relevant article based at least in part on client-side behavior data associated with the relevant article.

In one embodiment the client-side client behavior data for the article is received by a ranking processor and wherein the ranking score for the relevant article based at least in part on client-side behavior data associated with the article is determined by the ranking processor.

In one embodiment the computer readable medium further comprises arranging the article based upon the ranking score.

In one embodiment the search query is an explicit search query.

In one embodiment the search query is an implicit search query.

In one embodiment the client-side behavior data associated with the relevant article comprises scrolling activity data.

In one embodiment the client-side behavior data associated with the relevant article comprises printing data.

In one embodiment the client-side behavior data associated with the relevant article comprises book marking data.

In one embodiment the client-side behavior data associated with the relevant article comprises use of computer program application data.

In one embodiment the use of computer program application data is used in connection with additional client-side behavior data.

In one embodiment the additional client-side behavior data comprises idleness data.

In one embodiment the additional client-side behavior data comprises use of computer program applications data.

In one embodiment the client-side behavior data associated with the relevant article comprises frequency of article access data.

In one embodiment the client-side behavior data associated with the relevant article comprises time of access data.

In one embodiment the client-side behavior data associated with the relevant article comprises time of access relative to the access of other associated articles data.

In one embodiment the client-side behavior data associated with the relevant article comprises forwarding data.

In one embodiment the client-side behavior data associated with the relevant article comprises copying data.

In one embodiment the client-side behavior data associated with the relevant article comprises replying data.

In one embodiment the client-side behavior data associated with the relevant article comprises mouse movement data.

In one embodiment the client-side behavior data associated with the relevant article comprises user interactions with a separate article data.

In one embodiment the client-side behavior data associated with the relevant article comprises location data.

In one embodiment the computer readable medium further comprises program code for determining a combined score based at least in part on client-side behavior data for multiple users.

In one embodiment the computer readable medium further comprises program code for determining a combined score from a plurality of types of client-side behavior data.

In one embodiment creating a combined score from a plurality of types of client-side behavior data comprises using different weights for different types of behavior data or for client-side behavior data associated with different applications.

Another aspect of the invention provides a computer readable medium containing program code comprising: program code for determining client-side behavior data associated with an article; program code for providing the client-side behavior data associated with the article to a ranking processor; program code for determining a predetermined client behavior score based at least in part on the client behavior data associated with the article; and program code for storing the predetermined client behavior score associated with the article in a data store, wherein the predetermined client behavior score is associated with the article in the data store.

In one embodiment the computer readable medium further comprises program code for receiving a search query; program code for determining a relevant article associated with the search query; program code for receiving from a data store a predetermined client behavior score associated with the relevant article; and program code for arranging the relevant article based at least in part on the predetermined client behavior score associated with the relevant article.

Another aspect of the invention provides a computer readable medium containing program code comprising: program code for determining a query-independent score for an article based at least in part on client-side behavior data associated with the article; program code for receiving a search query; program code for determining a relevant article associated with the query; and program code for determining a ranking score based at least in part on the query-independent score.

In one embodiment the computer readable medium further comprises program code for processing the article in an order determined by the query-independent score.

Another aspect of the invention provides a computer readable medium containing program code comprising program code for identifying an article; program code for determining client-side behavior data for the article; program code for determining a score for the article based at least in part on client-side behavior data associated with the article; and program code for causing a display of the score.

Another aspect of the invention provides a system comprising: a) a processor for executing computer readable program instructions capable of improving a search ranking using article information; b) a memory for storing the computer readable program instructions capable of improving a search ranking using article information; c) a client application for allowing client behavior activity; d) a client article capable of receiving the client behavior activity; e) a query processor for receiving a search query; f) a monitoring engine for determining client behavior data associated with client behavior activity received by the article; g) a search engine for returning articles associated with the search query in a ranking order based at least in part on the client behavior data; and h) a data store for storing client behavior data associated with the client article.

In one embodiment the search engine comprises: a) an article locator for determining articles associated with the search query; b) a client behavior data processor for determining client behavior data associated with the articles associated with the search query; and c) a ranking processor for providing a ranking score based at least in part on the client behavior data associated with the articles associated with the search query.

Another aspect of the invention provides a method comprising: a) providing a client behavior data database ; b) receiving a search query; c) determining a set of articles relevant to the search query; d) determining a first article in the set of articles relevant to the search query; e) determining client behavior data associated with the first article; providing client behavior data associated with the first article to a ranking processor; g) determining a ranking score for the first article based at least in part on the client behavior data associated with the first article; h) arranging the first article based on the ranking score; and i) displaying relevant articles.

## Claims

1. A method comprising:
determining client-side behavior data from behavior on a client device associated with an article, where the client-side behavior data includes correspondence action data;
calculating a predetermined client behavior score for the article based at least in part on the client-side behavior data associated with the article; and
storing the predetermined client behavior score in a data store, wherein the data store associates the predetermined client behavior score with the article.

2. The method of claim 1, further comprising determining a combined predetermined client behavior score from a plurality of types of client-side behavior data.

3. The method of claim 2, wherein determining the combined predetermined client behavior score from the plurality of types of client-side behavior data comprises using different weights for different types of behavior data or for client-side behavior data associated with different applications.

4. The method of claim 1, further comprising determining a combined predetermined client behavior score based at least in part on client-side behavior data associated with the article for multiple users.

5. The method of claim 1, further comprising displaying the predetermined client behavior score.

6. The method of claim 1, wherein the client-side behavior data comprises idleness data associated with client-side use of computer program applications.

7. The method of claim 1, wherein the client-side behavior data associated with the article comprises time of access relative to the access of other associated articles data.

8. The method of claim, wherein the client-side behavior data associated with the article comprises book marking data.

9. A computer readable medium containing program code comprising:
program code for determining client-side behavior data from behavior on a client device associated with an article, where the client-side behavior data includes correspondence action data;
program code for calculating a predetermined client behavior score for the article based at least in part on the client-side behavior data associated with the article; and
program code for storing the predetermined client behavior score in a data stored, wherein the data store associates the predetermined client behavior score with the article.

10. The computer readable medium of claim 9, further comprising program code for determining a combined score from a plurality of types of client-side behavior data.

11. The computer readable medium of claim 10, wherein determining the combined score from the plurality of types of client-side behavior data comprises using different weights for different types of behavior data or for client-side behavior data associated with different applications.

12. The computer readable medium of claim 9, further comprising program code for determining a combined predetermined client behavior score based at least in part on client-side behavior data associated with the article for multiple users.

13. The computer readable medium of claim 9, further comprising program code for displaying the predetermined client behavior score.

14. The computer readable medium of claim 9, wherein the client-side behavior data comprises idleness data associated with client-side use of computer program applications.

15. The computer readable medium of claim 9, wherein the client-side behavior data associated with the article comprises time of access relative to the access of other associated articles data.
